Europäisches Patentamt

European Patent Office

Office européen des brevets

(19)

(11) Publication number: **0 271 496 B1**

# EUROPEAN PATENT SPECIFICATION

(12)

(45) Date of publication of patent specification: **10.06.92**   (51) Int. Cl.⁵: **G01F 1/00, G01F 1/05**

(21) Application number: **86905768.7**

(22) Date of filing: **26.08.86**

(86) International application number:
**PCT/EP86/00504**

(87) International publication number:
**WO 87/01443 (12.03.87 87/06)**

(54) **PORTABLE MEASURING DEVICE PROVIDED WITH AN INSTANT GAS FLOW RATE READING.**

(30) Priority: **26.08.85 NL 8502345**

(43) Date of publication of application:
**22.06.88 Bulletin  88/25**

(45) Publication of the grant of the patent:
**10.06.92 Bulletin  92/24**

(84) Designated Contracting States:
**BE CH DE FR GB IT LI NL**

(56) References cited:
**CA-A- 1 175 531**
**GB-A- 593 887**
**GB-A- 1 363 844**
**US-A- 3 430 489**

**See also references of WO8701443**

(73) Proprietor: **KETEL, Aart Jacob**
**Van Rijslaan 36**
**NL-2625 KX Delft(NL)**

(72) Inventor: **KETEL, Aart Jacob**
**Van Rijslaan 36**
**NL-2625 KX Delft(NL)**

(74) Representative: **Gasser, François W.**
**4, Jasmijnhof Leidsenhage P.O. Box 1080**
**NL-2260 BB Leidschendam(NL)**

## Description

The present invention relates to a gas flow measuring device according to the introducing part of claim 1.

Measuring devices for measuring air flow rates are well known and indispensable e.g. for instantly and exactly defining the gas flow rate which is blown out of or which is suctioned from an opening of an air terminal device or an air intake device or the like per unit of time, if such device is part of an air treatment appliance, an air fan appliance, an air heating installation or such like installations.

From GB-A-1 363 844 a gas flow measuring device is known wherein an impeller is used to control the pressure difference in a chamber separated by a diaphragm, the impeller speed being proportional to the gas flow. This known solution has the disadvantage that it uses mechanical elements as part of the measuring device and therefor is not very reliable.

The invention has as an object to provide for a measuring device which is easy to handle, promptly operating and also portable, which fully and reliably satisfies all requirements.

According to the invention this is obtained by a measuring device as defined in claim 1.

The pressure difference measured between two pressure gauges placed over a opening through which gas flows is used to control the speed and the direction of rotation of a fan and its speed and direction of rotation are measured by an electronic speed measuring device and transformed into a calibrated value indicating the volume of gas delivered (air flow rate). Such values are instantly displayed on a reading window.

The relationship between the speed of rotation of the fan and the air flow rate is fixed by calibration. By means of a revolutions counter the speed of the fan is measured and transformed into a corresponding air flow rate, which is instantly displayed in analogous or digitals at a reading window which is provided at the measuring device. The measuring range of the measuring device can e.g. go from 10 m3/h to 500 m3/h. Such large measuring range is obtained by using measuring areas overlapping each other, and defined by flow resistance discs mounted to the underside of the measuring device. Such flow resistance discs are discs presenting one or more flow passages in form of holes.

The temperature of the gas flowing through the measuring device may be measured and displayed on a reading window which is provided at the measuring device. By means of the new measuring device the most relevant values of a gas flowing through an opening can be measured precisely, e.g. the gas volume flowing through that opening per time unit and its temperature.

The new measuring device can be provided with a mounting piece adapted for use whith terminal devices and air intake passages of various dimensions. For operational purposes the measuring device is provided with a pair of handles. The most important operating means are mounted and located in such a way so that they can easily be operated when the user holds the handles. The ease of manipulation and the simplicity of use of the measuring device, as well as the speed of measurment under practical circumstances, are due to a power supply for the fan and the entire electronic measuring / and control system in form of a preferably rechargeable battery located in a portable bag and connected to the measuring device by means of a connection cable.

Whether the gas is suctionend from or blown through the opening is displayed in the reading window.

The new measuring device offers the following measuring possibilities:

1. The signals generated by the pressure gauges are treated such that their difference automatically selects the direction of rotation and the number of revolutions of the fan in such a way that the static pressure difference inside and outside a funnel mouth is reduced to equal zero (0). In the event of fluctuations in the gas flow, automatic control of the number of rotations of the fan is effected so that the zero point is obtained again. Gas flow rates measured during this control time are displayed on the reading window of the measuring device. An optical signal is shown when the zero point is reached. The measuring procedure starts by pushing a knob nearby the handle and the process is stopped by pushing that knob again.

2. When the gas flow passing through the opening fluctuates to a relatively high extent, the air flow rate is defined in such a way that the values measured during a predetermined period of time are averaged. The new measuring device allows such measuring method, because the measuring procedure under 1 can be operated during a predetermined period during which all air flow rates measured are memorized and then averaged. The last average value is memorized and displayed in the reading window. This automatic procedure is stopped by pushing the knob nearby the handle. By again pushing said knob the reading window becomes empty again and a next measurement can be effected.

3. If the differential width of the fluctuations is larger than the preset differential width at the measuring device, then the procedure as described under 2 will not result in displayable values and eigther the differential width for fluctiations on the measuring device is set at a greater value or the measuring procedure described under 1 must be followed.

4. The measuring procedure as decribed under 2 can also be operated without showing intermediate air flow rates.

5. The measuring device offers the possibility to preset by hand the direction of rotation and the number of revolutions of the fan. The measuring time is thereby shortened, because in this case the fan will rapidly reach its desired number of rotations in the desired direction.

6. The temperature of the gas flow may be measured and displayed in analogous or digital form.

7. The new measuring device offers possibilities for simplifications, such as:

7.1. switching off the automatic pressure difference measurement and enabling to measure air flow rates totally by hand;

7.2. no measurement of temperature;

7.3. mounting of one single pressure gauge upon the funnel mouth of the measuring device, in which case, while using a mounting piece no pressure gauge is mounted to the mounting piece, causing, however, a slight measuring error, which can be corrected lateron if desired, by means of a calibration graph, or automatically (e.g. by means of a microprocessor).

In the enclosed drawing a preferred embodiment of the invention is shown and it will be discribed hereinafter. In the drawing

fig. 1 is a perspectivic view of that embodiment of the new portable measuring device,

fig. 2 schematically shows an axial cross section through the measuring device of fig. 1,

fig. 3 is a block diagram of an electronic circuit serving to evaluate the pressure difference between two pressure gauges, and

fig. 4 is a block diagram of an electronic circuit for measuring the values of the gas flow and controlling the fan used in the measuring device.

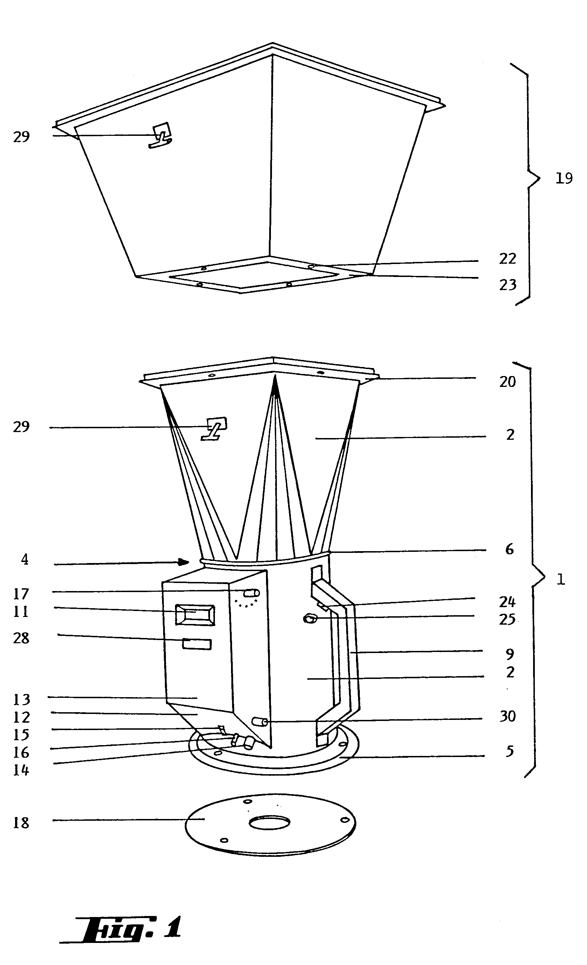

The measuring device 1 as shown in figs. 1 and 2 consists of a funnel housing 2 which is composed of a cylindrical part and a reducing piece going from a round shape to a square shape. In the cylindrical part a fan 3 is mounted in an axial direction by means of radial supporting means, as well as by a parallel flow passage director 4, and it is provided with a ring shaped lower flange 5. By means of a ring shaped folded edge 6 the reducing piece running form a round shape to a square shape is connected and fixed to the cylindrical part. At its upper and lower side the funnel housing is provided with both holes 7, and 8 respectively. At the outside of the funnel housing are provided diametrically two handles 9 and between these handles 9 there is located a box 10 having a reading window 11, two position switches 12 ("automatic" and "continious") and 13 ("hand operation switch"), a connection 14 for battery power supply, and indicator 15 for pressure differences ( + or 0 or -) and a gauge 16 for the calibration of the funnel measuring device. Upon the box 10 there is an optional switch 17 for handsetting the calibration scale which corresponds to the measuring range, including or not the use of a flow resistance disc 18 and an adapted mounting piece 19. The mounting piece 19, provided in various dimensions and shapes, can be fixed upon the measuring device 1 by means of bolting to be set via holes 8 in the square flange 20 at the upper side of the funnel mouth 21 and holes 22 in the connectable square flange 23 of the mounting piece 19. For quick mounting and removal respectively of the mounting piece 19 it will be clear that use can be made of quick closing means instead of the bolting described hereinabove. Integrated in or nearby the handle 9 there is provided an on/off switch 24 and an operating knob 25 for hand control/presetting of the fan 3. For connection against the lower flange 5 of the measuring device 1 a flow resistance disc 18 can be provided by means of via bolt holes 17 or in a similar way.

The mounting piece 19 can be rigid or of foldable shape. If the latter applies, the flexible wall 26 consists e.g. of impregnated nylon or rubber cloth that is stretched by means of a number of cloth stretching means 27, each of which is located in a corner of the mounting piece. Such a stretched structure, which is per se known for other purposes, will not be further described here.

The temperature of the flowing gas can be measured and the measured value can be displayed in the reading window 11, or from a separate window 28. The art by which temperatures of gasses are measured and are being made readable inannaloguos or digital scanner, is already known from other applications and will not be further described herein. The pressure gauges in the funnel housing 2 and the mounting piece 19 are shown by reference numbers 29.

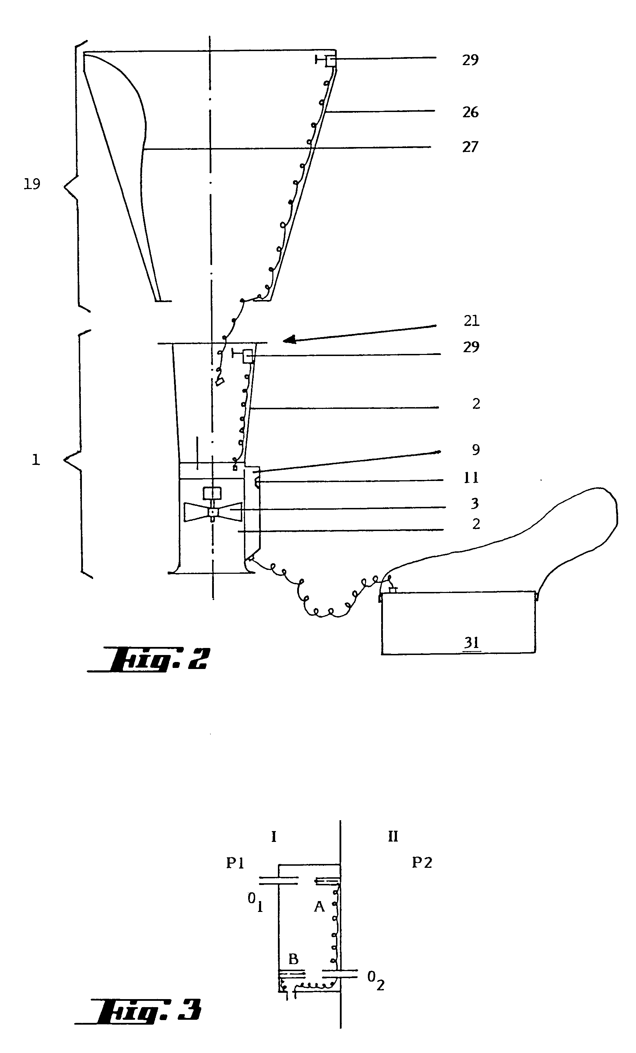

Fig. 3 schematically shows the principal of the measurement for the static pressure difference. In fact it is based upon measurement of an air flow. If the static pressure $p_1$ in space I is greater than the static pressure $p_2$ in space II, than a gasflow is generated from $0_1$ to $0_2$, which touches NTC thermistor A, however it does not touch NTC thermistor B. This will cause electrical voltage differences between A and B and these indicate the magnitude and direction ($p_1$ is greater than $p_2$) of the static pressure difference. In the event of a reversed direction of flow $p_1$ is smaller than $p_2$, and if there is no flow at all, $p_1 = p_2$ (the difference equals

zero).

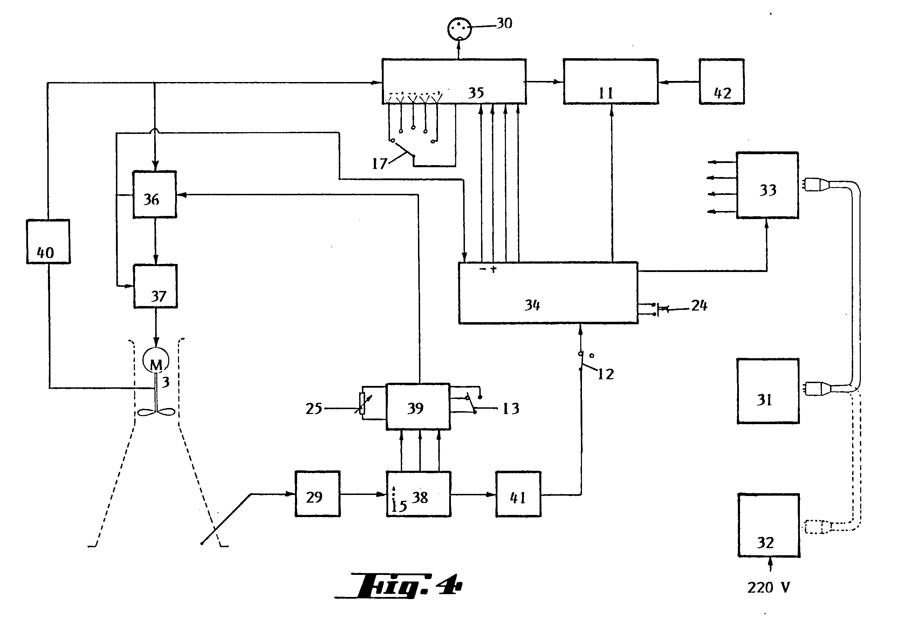

A recorder connector 30 (fig. 4) provided on the measuring device 1 makes registration of the measurement possible. Fig. 4 shows the principal of the measuring- and control system of the measuring device 1. The battery 31, which may be located in a portable bag provides for the power supply of the entire system. Preferably battery 31 will be rechargable and thereto it can be coupled to a battery charger 32. For carrying out the measurements battery 31 is connected to the main supply 33. Main supply 33 generates a number of different voltages which are desired in the system. Via a central control unit 34 the system can be started by means of an on/off switch 24. By actuating this switch a second time the system can be stopped again. In operation, after the measuring device 1, whether or not provided with the mounting piece 19, is placed over a gas passage opening, the measuring system is started up by means of switch 24. The central control unit 34 generates a.o.a signal to the power main supply 33 in order to bring other parts of the system also under current. Furthermore the central control unit 34 generates a signal to the reading window 11 for showing the measured values and also, by means of a + or - sign to show the direction in which the fan 3 rotates. The direction of rotation indicates the direction of flow of the gas through the device and this provides for an indicator to show if the gas flow is blown into or suctioned from the gas flow opening. The central control unit 34 activates also the calibration of the air flow rate 35. Correct calibration must be handset by means of selecting switch 17. Each calibration position of selecting switch 17 corresponds to two circuits, one for each direction of rotation of fan 3. The direction of rotation is switched on in the control signal converter 36 and in addition to being passed on to the controller 37 it is also passed on to the central control unit 34 and via the latter on to the gas flow calibrating means 35.

Calibration of the measuring device 1 may take place with or without flow resistance discs 18. Calibration of the measuring device 1 may further be executed with combinations of the measuring device 1 with flow resistance discs 18 and the mounting piece 19. To this purposes an exact gas flow rate measuring instrument is used and e.g. a measuring range with a measuring flange, is calibrated in both directions of rotation of the fan 3. The gas flow rate is proportional with the number of rotations of the fan 3. With a potentiometer or a microprocessor (which allows a very great exactness) each combination and direction of rotation, the correct relationship between the number of rotations of the fan 3 and the gas flow rate can be set. The manner in which the setting of the potentiometer or the microprocessor takes place is already known from other applications and it will therefore not be described further.

Pressure difference gauges 29 measure the static pressures inside the measuring device 1, more particularly inside the funnel housing 2 and the mounting piece 19. From these measurings the difference of the static pressures at the measuring points is calculated and whether the pressure difference is of a positive or negative value. The measuring device 1 will try to render this pressure difference as small as possible. The value of the pressure difference is sent to a pressure difference indicator/switch 38. The latter controls indicator 15, consisting of three LED's (LED = Light Emmiting Diode). By means of the indicator 15 the user of the measuring device 1 can check if the pressure difference is positive, zero or negative and thereby know in which operational state of control the measuring device 1 actually is.

Now the operation of the new measuring device 1 will be described, assuming that switch 13 is in the "on" position. The pressure difference indicator 38 emits four switching signals. Three signals are received by the zero control means 39. All these three signals are related to so-called signal windows, very small windows surrounded by a larger window. In this way the range of signals is divided into five different areas. Each outgoing signal of the pressure gauges 29, or more precisely the pressure difference signals generated on the basis of the signals of the pressure gauges 29 may be located in one of these areas. Depending on the position of the signal there will be carried out a rapid or a slow control activity. In the event that the outgoing signal is located within one of the small signal windows, the pressure difference indicator 38 will not carry out any control activity and there will be only a memory function. The outgoing voltage of the zero control means 39 will remain constant in this case. This situation corresponds to a static pressure difference equalling zero. The output of zero control means 39 serves as a variable setpoint for a second control loop. This signal reaches control signal converter 36. The second control loop is constituted by fan 3, rotations measuring device 40, control signal converter 36 and controller 37. This second control loop follows the setpoint. It may be that the control loop may follow the setpoint only by changing the direction and the number of rotations of the fan 3. Corresponding to a defined setpoint there is only one number and direction of rotations of the fan 3 which will generate a voltage which is fully equal to that of the setpoint. The output at the control signal converter 36 controls the controller 37, which in its turn controls the fan 3. Once the setpoint has achieved a signal value indicating that the static pressure difference equals zero, then by means of the fourth switch signal, derived from the pressure difference indicator 38, the zero point detector 41 is activated. Zero point detector 41 then generates a switch signal which is sent to the central control unit 34 via switch 12. In the position "automatic" of switch 12, a certain period of time will lapse after the zero point detector 41 has issued a switch signal to the central control unit 34, whereafter the measurement is automatically stopped. During the time of measurement there is carried out an averaging of the values measured during this time. It is the average value which, after the measuring time has gone by, is displayed on the reading window 11. Thanks to memorization of this average value it can be displayed even after the measurement has been finished. In the event that switch 12 is in the position "continuous", the switch signal, derived from the zero point detector 41, is blocked and then the user himself must finish the measurement by pushing in the on/off switch 24. The position "continuous" of switch 12 is necessary in the event that the gas flow rate demonstrates such large fluctuations, that the setpoint will never be stable enough to arrive to automatic switching off.

If switch 13 is set in the position of "hand operation", then switch 12 is set to its "continuous" position. In the position of "hand operation" of switch 13 the automatic control of the fan 3 to a value, in which the pressure difference inside the funnel housing 2 and the mounting piece 19 is zero, is blocked and by means of a potentiometer 25 any given setpoint and so any given number of rotations and direction of the fan 3 can be chosen. Potentiometer 25 is hand-operated. In the position "hand operation" of switch 13 it will thus be possible to carry out a measurement entirely by hand, based upon the signals which appear upon the indicator 15. A much more important application of this possibility, however, is the following: the direction and the number of rotations of the fan is selected by hand, lying closely to the expected gas flow rate to be measured (presetting). If thereafter measurment is made in which the switch 13 is in its operating position "on", then fan 3 is given a number of starting up rotations which is equal to the presetting, so that the fan 3 very quickly reaches nearly the desired number of rotations. Thereafter, the automatic control process comes into operation again. The time for measurement is thereby very much shortened, because fan 3 is reaching its number of rotations very fast. The value of the measurement which is shown on the reading window 11 corresponds to the value of the gas flow calibration means 35. An indicator 42 shows the warning "low batt" upon the reading window 12, when the voltage of the battery 31 falls under a predefined value.

**Claims**

1. A portable gas flow measuring device (1) for automatically measuring the gas flow in an opening, said measuring device (1) is: placeable over said opening, comprises mounting means (5, 19, 20) at both ends and is provided with pressure gauges (29) allowing the measurement of a pressure difference between the inside and the outside of a funnel mouth (21) when said measuring device (1) is placed over said opening, either directly or by means of a mounting piece (19), the values of the pressures measured by the pressure gauges (29) being used to calculate the pressure difference between the measuring points and the value obtained therewith being transformed into an electronic signal which controls the intensity of the power supply to a fan (3) and indicates the direction in which the gas flows, the fan (3) being located in a part of a funnel housing (2) of the measuring device (1) having a cylindrical cross section, each measured pressure difference being reduced down to zero by controlling the speed and the direction of rotaton of the fan (3) in such a way that a secondary gas flow is created that presents the reverse speed and direction values of the measured gas flow, the values of the measured gas flow being instantly displayed on a reading window (11) connected to the measuring device (1).

2. Measuring device (1) according to claim 1, characterized, in that the speed of the fan (3) is measured by an electronic speed measuring device and is transformed into a calibrated value indicating the volume of gas delivered through said opening per time unit, that value being instantly displayed on the said reading window (11).

3. Measuring device (1) according to claim 1 and 2, characterized in that an electronic circuits is provided which maintains the speed and the direction of the fan (3) to values at which the pressure difference equals zero.

4. Measuring device (1) according to claim 3, characterized in that the said electronic circuit provides that in case of a fluctuating gas flow the fluctuating speeds of the fan (3) are averaged during a predetermined period of time whereafter this averaged value is displayed at the reading window (11).

5. Measuring device (1) according to claim 1, characterized in that the mounting piece (19) is provided with a flexible airtight sealing edge for fixing it over the opening through which the gas flow which is to be measured flows, in order to adapt it to the size and/or the shape respectively therof, said mounting piece being provided with one of the pressure gauges (29) present in the measuring device (1).

6. Measuring device (1) according to claim 1, characterized in that handles (9) are provided on the outside of the funnel housing (2) and that nearby one of these handles (9) there is provided an operating knob (25) for operating the measuring device (1).

7. Measuring device (1) according to claim 1, characterized in that the power for the fan (3) is provided by means of a battery (312) housed in a portable bag in which also a connection cable to the measuring device (1) is included.

8. Measuring device (1) according to claim 1, characterized in that means are provided displaying automatically whether the fan (3) sucs gas from or blows gas into direction of said opening.

9. Measuring device (1) according to claim 1, characterized in that temperature indicating means are provided for measuring the temperature of the gas flow and displaying it in the reading window (11) or a separate window (28).

10. Measuring device (1) according to claim 1, characterized in that connection means are provided for connecting the measuring device (1) to a recording apparatus for recording the measured values of the gas flow through said opening.

**Revendications**

1. Dispositif de mesure portable (1) pour mesurer automatiquement le débit gazeux dans une ouverture, ce dispositif (1) pouvant se placer sur l'ouverture, comprenant des moyens de montage (5, 19, 20) aux deux extrémités ainsi que des capteurs de pression (29) permettant la mesure d'une différence de pressions entre l'intérieur et l'extérieur de l'embouchure (21) d'un tunnel, lorsque ce dispositif (1) est placé sur l'ouverture, soit directement, soit par l'intermédiaire d'une pièce de montage (19), les valeurs des pressions mesurées par les capteurs de pression (29) servant à calculer la différence de pression entre les points de mesure et la valeur ainsi obtenue étant transformées en un signal électronique qui commande la puissance fournie à un ventilateur (30) et indique la direction de passage du gaz, le ventilateur (30) étant placé dans une partie d'un corps de tunnel (2) du dispositif (1) ayant une section cylindrique, chaque différence de pression, mesurée, étant réduite à zéro par la commande de la vitesse et du sens de rotation du ventilateur (3) de façon à créer un écoulement secondaire de gaz qui présente une vitesse et une direction opposées à celles du débit gazeux mesuré, la valeur du débit gazeux mesuré étant affichée instantanément sur une fenêtre de lecture (11) reliée au dispositif de mesure (1).

2. Dispositif de mesure (1) selon la revendication 1, caractérisé en ce que la vitesse du ventilateur (3) est mesurée par un dispositif électronique de mesure de vitesse et est transformée en une valeur calibrée indiquant le volume de gaz fourni par unité de temps, cette valeur étant affichée instantanément sur lu fenêtre de lecture (11).

3. Dispositif de mesure (1) selon les revendications 1 et 2, caractérisé par un circuit électronique qui maintient la vitesse et le sens de fonctionnement du ventilateur (3) à des valeurs telles que la différence de pression soit égale à zéro.

4. Dispositif de mesure (1) selon la revendication 3, caractérisé, en ce que le circuit électronique est tel qu'en cas de fluctuation du flux de gaz, il s'établisse une moyenne des vitesses de fluctuation du ventilateur (3) pendant une période prédéterminée de temps puis cette valeur moyenne est affichée dans la fenêtre de lecture (11).

5. Dispositif de mesure (1) selon la revendication 1, caractérisé en ce que la pièce de montage (19) comporte un bord de scellement étanche, souple, pour être fixé sur l'ouverture traversée par le flux de gaz à mesurer pour s'adapter en dimension et/ou en forme à cette ouverture, cette pièce de montage comportant l'un des capteurs de pression (29) appartenant au dispositif de mesure (1).

6. Dispositif de mesure (1) selon la revendication 1, caractérisé en ce que les poignées (9) sont prévues à l'extérieur du corps de tunnel (2) et au voisinage de l'une des poignées (9) il y a un bouton de manoeuvre (25) pour actionner le dispositif de mesure (1).

7. Dispositif de mesure (1) selon la revendication 1, caractérisé en ce que la puissance du ventilateur (3) est fournie par une batterie (312) logée dans un boîtier portatif muni d'un câble de liaison pour la dispositif de mesure (1).

8. Dispositif de mesure (1) selon la revendication 1, caractérisé en ce que des moyens sont prévus pour afficher automatiquement le fait que le ventilateur (3) aspire ou refoule le gaz en direction de l'ouverture.

9. Dispositif de mesure (1) selon la revendication 1, caractérisé en ce que des moyens indicateurs de température sont prévus pour mesurer la température du flux de gaz et afficher celle-ci dans la fenêtre de lecture (11) ou dans une fenêtre distincte (28).

10. Dispositif de mesure (1) salon la revendication 1, caractérisé en ce que des moyens de liaison sont prévus pour relier le dispositif de mesure (1) à un appareil d'enregistrement pour enregistrer les valeurs mesurées du débit gazeux à travers l'ouverture.

**Patentansprüche**

1. Gasflußmeßvorrichtung (1) zur automatischen Messung eines Gasflusses in einer Öffnung, wobei die Meßvorrichtung (1) über der Öffnung tragbar anbringbar ist, Befestigungsmittel (5, 19, 20) an beiden Enden aufweist und mit Druckmanometern (29) ausgestattet ist, die die Messung dar Druckdifferenz zwischen der Innenseite und der Außenseite einer trichterförmigen Öffnung (21) gestatten, wenn die Meßvorrichtung (1) über der Öffnung direkt oder mit Hilfe eines Befestigungsteils (19) angebracht ist, wobei die mit den Druckmanometern (29) gemessenen Druckwerte zur Berechnung des Druckdifferenzwertes zwischen den Meßpunkten gebraucht werden und dieser erhaltene Wert in ein elektrisches Signal transformiert wird, welches die Intensität eines Netzgerätes für einen Ventilator (3) steuert und die Richtung des Gasflusses anzeigt, wobei der Ventilator (3) in einem Teil des trichterförmigen Gehäuses (2) der Meßvorrichtung (1) mit einem zylindrischen Querschnitt sitzt, wobei jede gemessene Druckdifferenz auf Null verringert wird, durch die Steuerung der Geschwindigkeit und Drehrichtung des Ventilators (3) derart, daß ein zweiter Gasfluß erzeugt wird, der den entgagengesetzten Geschwindigkeitswert und Rictungswert des gemessenen Gasflusses aufweist und daß die gemessenen Werte des Gasflusses sofort in einem Lesefenster, das mit der Meßvorrichtung (1) verbunden ist, angezeigt werden.

2. Meßvorrichtung (1) nach Anspruch 1, gekennzeichnet dadurch, daß die Geschwindigkeit des Ventilators (3) mit einer elektronischen Geschwindigkeitsmeßvorrichtung gemessen wird und in einen kalibrierten Wert umgewandelt wird, der das durch die Öffnung gelieferte Gasvolumen pro Zeiteinheit angibt und daß dieser Wert sofort in dem Lesefenster (11) angezeigt wird.

3. Meßvorrichtung (1) nach Anspruch 1 und 2, gekennzeichnet dadurch, daß ein elektrischer Schaltkreis vorhanden ist, der die Geschwindigkeit und die Richtung des Ventilators (3) auf Werte, bei welchen die Druckdifferenz Null wird, regelt.

4. Meßvorrichtung (1) nach Anspruch 3, dadurch gekennzeichnet, daß dar elektronische Schaltkreis dafür sorgt, daß im Falle eines schwankenden Gasflusses die schwankenden Geschwindigkeiten des Ventilators (3) über ein vorbestimmtes Zeitintervall gemittelt werden und daraufhin im Lesefenster (11) engezeigt werden.

5. Meßvorrichtung (1) nach Anspruch 1, gekennzeichnet dadurch, daß das Befestigungsteil (19) mit einem flexiblen luftdichten Dichtungsrand zur Fixierung über der Öffnung, durch welche der Gasfluß gemessen wird, versehen ist, um es in Größe und/oder Form an sie anzupassen, wobei das Befestigungsteil eines der Druckmanometer (29) der Meßvorrichtung enthält.

6. Meßvorrichtung (1) nach Anspruch 1, gekennzeichnet dadurch, daß Handgriffe (9) an der Außenseite des trichterförmigen Gehäuses vorhanden sind und daß nahe bei diesen Handgriffen (9) ein Betriebsschalter (25), um die Meßvorrichtung in Betrieb zu nehmen, vorhanden ist.

7. Meßvorrichtung (1) nach Anspruch 1, dadurch gekennzeichnet, daß die Leitung für den Ventilator (3) von einer Batterie, die in einer tragbaren Tasche untergebracht ist, in welcher auch ein Verbindungskabel zur Meßvorrichtung (1) enthalten ist, kommt.

8. Meßvorrichtung (1) nach Anspruch 1, dadurch gekennzeichnet, daß Mittel vorhanden sind, die automatisch anzeigen, ob der Ventilator (3) Gas saugt oder Gas in Richtung der Öffnung bläst.

9.  Meßvorrichtung (1) nach Anspruch 1, dadurch gekennzeichnet, daß Temperaturanzeigemittel vorhanden sind, die zur Messung der Temperatur des Gasflusses und zur Anzeige in dem Lesefenster (11) oder in einem separaten Fenster (28) dienen, vorhanden sind.

10. Meßvorrichtung (1) nach Anspruch 1, dadurch gekennzeichnet, daß Verbindungsmittel vorhanden sind zur Verbindung der Maßvorrichtung (1) mit einem Aufzeichnungsgerät zur Aufzeichnung der gemessenen Werte des Gasflusses durch die Öffnung.

**Fig. 1**

29

26

27

19

21

29

2

9

11

3

2

1

31

**Fig. 2**

I                    II

P1                                P2

$0_1$                A

B

$0_2$

**Fig. 3**

Fig. 4